# EUROPEAN PATENT SPECIFICATION

(11) **EP 0 354 572 B1**
(45) Date of publication and mention of the grant of the patent: **18.01.1995**
(21) Application number: 89114823.1
(22) Date of filing: 10.08.1989
(51) Int. Cl.: H04L 12/40, H04L 12/64

(54) **Improved local area network system**
Lokale Netzwerksysteme
Système de réseau local

(30) Priority: 10.08.1988 JP 199339/88; 17.08.1988 JP 204238/88
(43) Date of publication of application: 14.02.1990
(73) Proprietor: OMRON CORPORATION, Kyoto-shi, Kyoto-fu 617 (JP)
(72) Inventor: Kato, Tetsuo c/o Patent Dept, Shimokkaiinji Nagaokakyo-shi Kyoto-fu (JP); Tanabe, Shigemi c/o Patent Dept, Shimokkaiinji Nagaokakyo-shi Kyoto-fu (JP); Koshiro, Chiaki c/o Patent Dept, Shimokkaiinji Nagaokakyo-shi Kyoto-fu (JP)
(74) Representative: Kahler, Kurt, Dipl.-Ing.

(56) References cited:
- EP-A- 0 089 159
- EP-A- 0 104 991
- EP-A- 0 173 947
- GB-A- 2 201 566
- COMPUTER NETWORKS, vol. 8, no. 4, August 1984, pages 336-346, Amsterdam, NL; J. WONG et al.: "Analysis of a token ring protocol for voice transmission"

## Description

### TECHNICAL FIELD

The present invention relates to a local area network (LAN) which cyclically transmits data according to the system of passing a token around a logical ring, and in particular to an improved local area network which permits transmission of both synchronous data and asynchronous data.

### BACKGROUND OF THE INVENTION

In conventional cyclic transmission systems which are based upon the system of passing a token through a logical ring, the order of the stations for transmitting data is determined, for instance, according to the order of their addresses in a network management information table, and each of the stations transmits data after monitoring that the preceding station has finished data transmission.

However, according to such conventional transmission systems, when asynchronous data or incidental transmission data which arise at arbitrary timing coexist with synchronous data in each station, or when there are stations which are dedicated to the transmission of asynchronous data, each station is required to monitor the existence of any asynchronous data in the data transmitted from the preceding station, and is therefore required to be equipped with a monitoring timer. In particular, the determination of completion of a retransmission of asynchronous data after the occurrence of a transmission error is very time consuming.

According to a conventional method for controlling data transmission in a local area network (LAN), it has been known to provide a timer for determining the time period during which a token (transmission priority) can 5 be held, and to allow data transmission from the time the token is received until the timer times out.

However, according to such a method for controlling the length of transmitted data, if the token is required to go entirely around the logical 10 ring, it is necessary for the sum of the timer settings of all the stations to be equal to the time required for the token to be passed entirely around the logical ring, and the total sum of the timer settings must be checked before starting up the system. Further, to 15 even more complicate the operation of the system, the timer settings of all the stations must be revised every time a station is either added to or removed from the logical ring, and the revision of the timer settings requires a considerable time.

EP-A-0 173 947 discloses a local area network as defined in the pre-characterizing part of claim 1, which comprises a plurality of node stations arranged along a common unidirectional bus. At least part of the node stations forms a logical ring to pass a token frame from one station to another in a cyclic fashion. Each of the node stations which has received the token frame is allowed to transmit both asynchronous and synchronous data. However, in case the time period for the token to go entirely around the logical ring varies, loss of data can not be excluded.

### BRIEF SUMMARY OF THE INVENTION

It is the object of the present invention to allow each station to pass a token (transmission priority) to a succeeding station so that only the station holding the token at any particular moment be allowed to transmit cyclic data and, if any, event data, wherein the time period for data processing in particular station can be properly allocated.

This object of the present invention can be accomplished by a local area network comprising a plurality of node stations connected to a common communication line, wherein a logical ring is formed by at least part of the node stations to pass a token frame from one station to another in an endless and cyclic fashion allowing each of the node stations which has received the token frame to transmit data comprising event data and wherein
at least one of the node stations comprises a data communication unit for controlling transmission of data, memory means for storing data received by the data communication unit, an application unit for processing the data stored in the memory means, and a timer for measuring a time interval which has elapsed since the token was received by the station in a preceding cycle of passing the token along the logical ring, the data communication unit being suspended from transmitting data until the timer has timed out.

Thereby, possible interference from data reception on the operation of the application unit can be avoided, and the reliability of the system can be improved.

Typically, the transmitted data comprise both event data and cyclic data.

Since a field indicating the permissible length of transmitted data is provided in the token frame representing a transmission priority instead of using a timer, and the token is passed entirely around a logical ring according to the data length, the time required for the token to be passed entirely around the logical ring can be simply selected, and the handling of the network is substantially simplified.

### BRIEF DESCRIPTION OF THE DRAWINGS

Now the present invention is described in the following with reference to the appended drawings, in which:
Figure 1 illustrates a logical ring for a token passing system;
Figure 2 illustrates the order of transmitting synchronous data and asynchronous data as the token is passed completely around the logical ring;
Figure 3 is a flow chart for describing the processing at each of the nodes;
Figure 4 illustrates the time required for passing a token entirely around the logical ring;
Figure 5 illustrates the structure of the token frame;
Figure 6 illustrates the contents of the memory for storing the initial value of the permissible transmission data length;
Figure 7 is a flow chart for describing the process of processing the permissible transmission data length in the token frame;
Figure 8 illustrates an embodiment of the bus-type LAN according to the present invention;
Figure 9 is a block diagram illustrating the internal structure of one of the node stations;
Figure 10 schematically illustrates a logical ring; and
Figure 11 is a flow chart illustrating the operation of one of the node stations.

### DETAILED DESCRIPTION OF THE PREFERRED EMBODIMENT

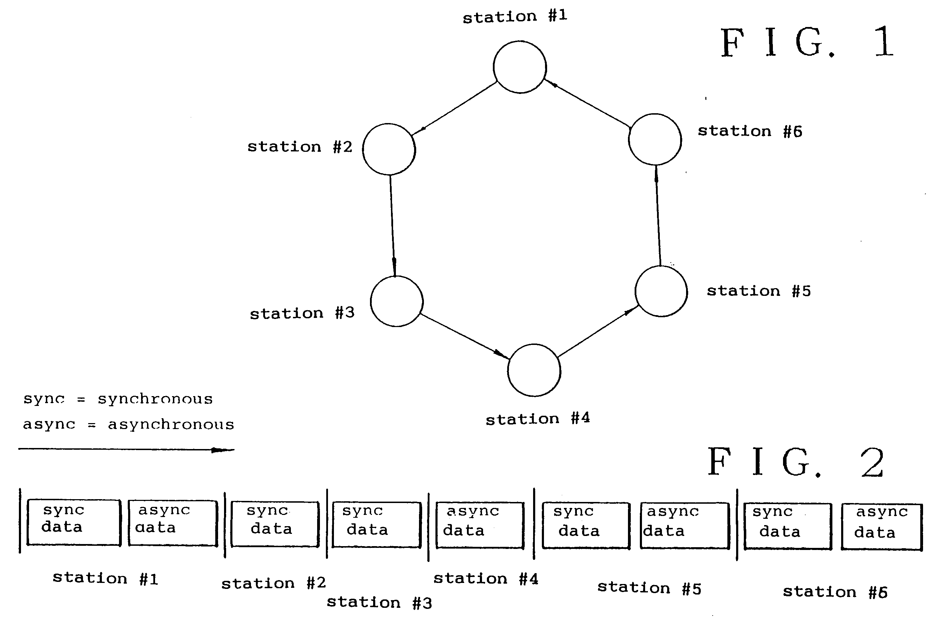

Figure 1 illustrates a logical ring in which data transmission is controlled by the system of passing a token, and a transmission priority (a token) is passed through this logical ring to allow N:N data transmission. In the present embodiment, a logical ring is formed by stations 1 through 6, and the token is passed around the stations 1 through 6 in the direction indicated by the arrow at a certain timing and in a cyclic fashion.

Figure 2 illustrates the order of transmitting synchronous data and asynchronous data according to the token passing system, and, according to the present embodiment, the stations 1, 5 and 6 are stations for both synchronous data and asynchronous data, the stations 2 and 3 are stations only for synchronous data, and the station 4 is only for asynchronous data.

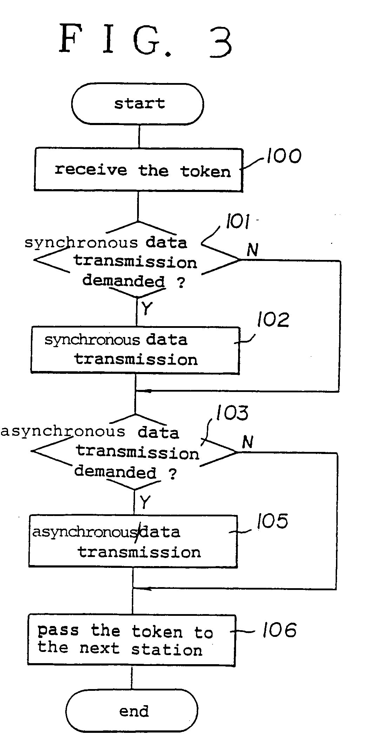

Figure 3 is a flow chart illustrating the processing at each of the nodes. According to the system of the present invention, a logical ring (stations 1 through 6) is formed to determine the order of passing the token, and synchronous data are transmitted as the token is passed around the logical ring.

The token is received from the preceding station in step 100. If the station which has received the token is a station for synchronous data (yes in step 101), synchronous data are transmitted from this station (step 102). Then, it is determined whether a demand for transmitting asynchronous data exists or not (step 103), and if there is indeed a demand for transmitting asynchronous data, the asynchronous data are transmitted (step 105) and the token is passed to the next station along the logical ring.

On the other hand, if the station which has received the token in step 101 is not a station for transmitting synchronous data (no in step 101), the program flow advances to step 103 from which the program flow further advances to step 105 to transmit asynchronous data if there is a demand for asynchronous data transmission. If there is no demand for asynchronous data transmission in step 103 (no in step 103), the token is simply passed to the next station without any asynchronous data transmission.

When all of the stations have conducted the above mentioned processes as the token is passed on to them, one cycle of synchronous data transmission is completed.

Thus, according to the present embodiment, since each station is not required to be equipped with a monitoring timer and there is no need to monitor the transmission of synchronous data by the preceding station, the LAN can be constructed economically, and the efficiency of data transmission can be improved.

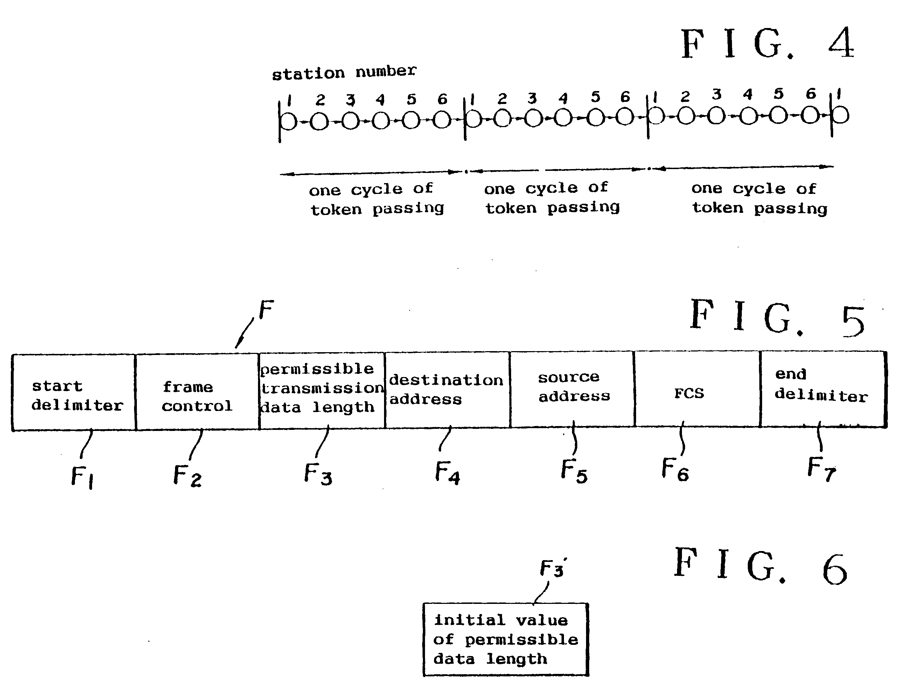

In the second embodiment, a logical ring is likewise formed by stations 1 through 6, and the token is passed around the stations 1 through 6 in the direction indicated by the arrow at a certain timing and in a cyclic fashion, as shown in Figures 1 and 4.

Figure 5 illustrates the format and the contents of a token frame F which consists of a start-delimiter portion F1, a frame control portion F2, a permissible transmission data length portion F3, a receiver address portion F4, a sender address portion F5, a FCS (frame check sequence) portion F6, and an end delimiter portion F7. Memory in the token frame of station 1 stores the initial value F3′ of the new permissible transmission data length which has been renewed after the token has been passed entirely around the logical ring (refer to Figure 6).

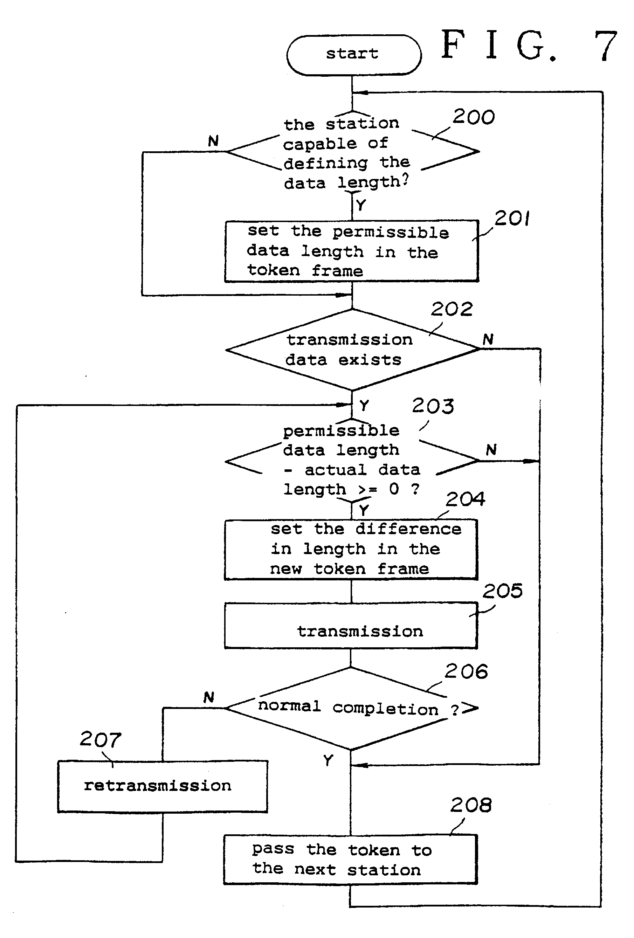

Now the process of processing the permissible transmission data length of the token frame is described in the following with reference to the flow chart illustrated in Figure 7.

First of all, power is turned on, and the processing is started.

It is determined in step 200 whether the station holding the token is a station for initially setting up the permissible transmission data length or not, and if it is found to be the initial setup station (station 1 in this case), an initial value of the permissible transmission data length is set up within the token frame of this station (step 201).

Then, it is determined in step 202 whether there are transmission data in the present station or not, and the existence of data in the present station is determined in step 202 (yes in step 202). Then, the length of the data which are about to be transmitted is subtracted from the permissible transmission data length in the token frame, and if the difference is equal to or larger than zero, the transmission data length after the subtraction is set up in the token frame before it is transmitted (steps 203 through 205).

When the transmission has been completed normally (step 206), the token is passed to the next station. If the transmission has not been completed normally, a retransmission process is carried out (step 207), and the program flow returns to step 203.

If there are no data to be transmitted in step 202 (no in step 202), or when the difference after the subtraction is negative (no in step 202), no data transmission takes place, and the received permissible transmission data length is simply passed on to the next station (step 208). In the next station to which the token has been passed, the program flow advances to step 202 via step 200 (no), and the above described action is repeated.

The token is passed around the logical ring, and each station determines whether it should transmit or not according to the permissible transmission data length in the token frame and the length of the data which is about to be transmitted therefrom.

When the token has been passed entirely around the logical ring and has returned to the original station 1, a new initial value for the permissible transmission data length is set up in the token frame, and the above described action is repeated.

Thus, according to the present embodiment, since a field indicating a permissible transmission data length is provided in the token frame instead of using a timer, and the token is passed around the logical ring according to the length of transmitted data, the time required for the token to be passed entirely around the logical ring can be set up within a prescribed time interval, and the handling of the system is substantially improved.

Typically, to control the overall time required for the token to go entirely around the logical ring, the time interval during which each node station can hold the token is limited. This permits reliable and high speed transmission even when the traffic in the network system has increased. However, each node station of such a LAN is provided with a communication unit for controlling data communication and an application unit to process the data stored in the memory of the communication unit, and if the token comes around while the application unit is still processing the previously received data, this will interfere with the operation of the application unit, and the reliability of the system will be lost.

The following embodiment is intended to eliminate such a potential problem by stopping the operation of the communication control unit while the time interval required for the application unit to complete its job.

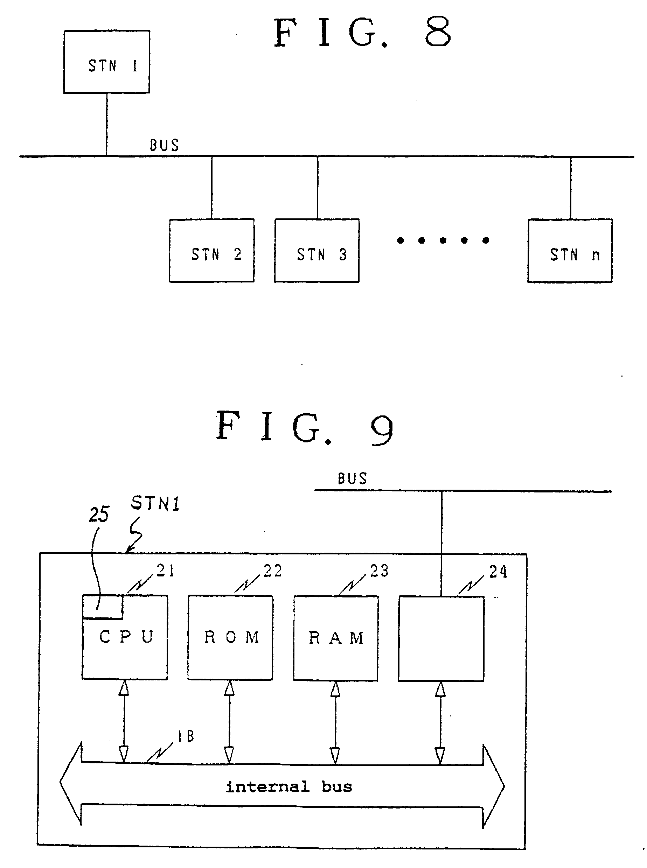

Figure 8 illustrates the general structure of the bus-type LAN according to the present invention. Referring to Figure 8, BUS denotes a bus transmission line, and STN1 through STNn denote node stations which are connected to this bus transmission line. The first node station STN1 is a master station which monitors the time interval required for the token to go entirely around the logical ring, and passes the token around the logical ring always at a fixed period.

Figure 9 illustrates the internal structure of the node station STN1 which comprises a CPU 21, ROM 22, RAM 23, a transmission control unit 24, and an internal bus IB connecting these parts together. The CPU 21 controls the communication control unit 24 and carries out the exchange of various frames with the bus and monitoring of the time interval required for the token to go entirely around the logical ring so that the token may be passed around at a fixed timing, according to the program stored in the ROM 22. The application unit may consist of a part of the CPU 21 as denoted by numeral 25.

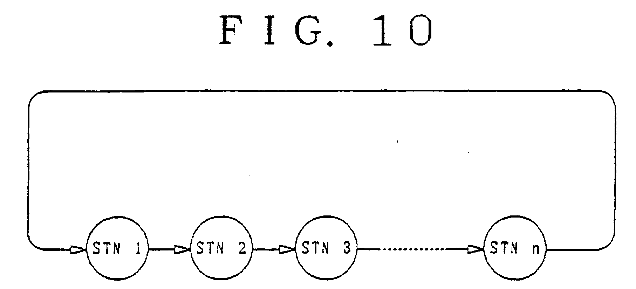

Figure 10 illustrates how the token is passed from one station to another. In this logical ring, the token is passed in an endless fashion, or the token received by the last station STNn is returned to the first station STN1.

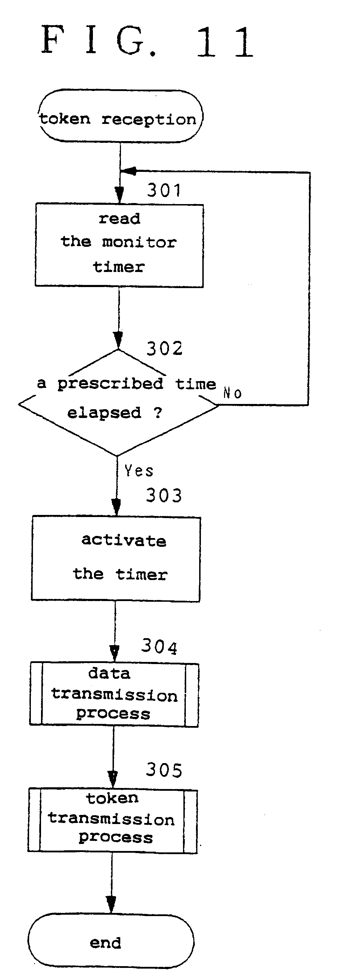

Figure 11 is a flow chart describing the operation of the node station STN1. When the token is received by this station, the time elapsed after the reception of the token in the previous cycle is read out in step 301. As long as a predetermined time allocated to the particular station has not run out (no in step 302), the program flow returns to step 301, and this is repeated until the time interval allocated to this station runs out. The aforementioned predetermined time is a time interval required for the application unit of this particular station to process the data received by the communication unit and stored in the RAM 23.

If the time which has been read out becomes larger than the predetermined time period (yes in step 302), the value of the timer is cleared, and the measurement of the time during which the token is held in the next cycle is started in step 303.

When there is any demand for data transmission, transmission of data and reception of a response to the transmission are carried out in step 304. There is an upper limit to the time interval which each of the stations can use, and after data transmission of a certain time interval has been carried out, the token is passed to the station which is next thereto in the logical ring in step 305. When a response is received from the recipient of the token, the process of data communication is concluded. If no response is received from the intended recipient of the token, a necessary token recovery process is carried out.

According to this embodiment, by providing a timer to each of the node stations of the network, the time for the token to go entirely around the logical ring can be kept constant so that a time period for data processing can be properly allocated, and the loss of data due to shortage of such a processing time can be prevented.

## Claims

1. A local area network comprising a plurality of node stations (STN1 to STNn) connected to a common communication line (BUS), wherein a logical ring is formed by at least part of said node stations (STN1 to STNn) to pass a token frame (F) from one station to another in an endless and cyclic fashion allowing each of said node stations which has received said token frame (F) to transmit data, and wherein said transmitted data comprise asynchronous data,
**characterized** in
that at least one (STN1) of said node stations (STN1 to STNn) comprises a data communication unit (24) for controlling transmission of data, memory means (23) for storing data received by said data communication unit (24), an application unit (25) for processing the data stored in said memory means (23), and a timer for measuring a time interval which has elapsed since said token was received by said station in a preceding cycle of passing the token along said logical ring, said data communication unit (24) being suspended from transmitting data until said timer has timed out.

2. A local area network according to claim 1, wherein said transmitted data comprise both asynchronous data and synchronous data.

3. A local area network according to claim 1 or 2, wherein said token frame (F) includes a field (F₃) defining a permissible length of transmitted data, and each of said node stations (STN1 to STNn) is provided with means for transmitting its data only when its said data are not longer than said permissible length of transmitted data.

## Patentansprüche

1. Ein lokales Netz mit einer Vielzahl von Knotenstationen (STN1 bis STNn), die mit einer gemeinsamen Kommunikationsleitung (BUS) verbunden sind, wobei ein logischer Ring durch zumindest einen Teil der Knotenstationen (STN1 bis STNn) ausgebildet wird, um einen Token-Datenübertragungsblock (F) in einer endlosen und zyklischen Weise von einer Station zu einer anderen durchlaufen zu lassen, was es jeder der Knotenstationen, die den Token-Datenübertragungsblock (F) empfangen hat, ermöglicht, Daten zu übertragen, und wobei die übertragenen Daten asynchrone Daten aufweisen,
dadurch **gekennzeichnet**,
daß zumindest eine (STN1) der Knotenstationen (STN1 bis STNn) eine Datenübertragungseinheit (24) zum Steuern der Datenübertragung, eine Speichereinrichtung (23) zum Speichern von durch die Datenübertragungseinheit (24) empfangenen Daten, eine Anwendungseinheit (25) zum Verarbeiten der in der Speichereinrichtung (23) gespeicherten Daten und einen Zeitgeber zum Messen eines Zeitintervalls aufweist, daß verstrichen ist, seitdem der Token in einem vorhergehenden Zyklus des Hindurchlaufens des Tokens längs des logischen Rings durch die Station empfangen wurde, wobei die Datenübertragungseinheit (24) vom Datenübertragen ausgeschlossen wird, bis die Zeit des Zeitgebers abgelaufen ist.

2. Ein lokales Netz nach Anspruch 1,
wobei die übertragenen Daten sowohl asynchrone Daten als auch synchrone Daten aufweisen.

3. Ein lokales Netz nach Anspruch 1 oder 2,
wobei der Token-Datenübertragungsblock (F) ein eine zulässige Länge übertragener Daten festlegendes Feld (F₃) umfaßt und jede der Knotenstationen (STN1 bis STNn) mit einer Einrichtung zum Übertragen ihrer Daten nur dann, falls ihre Daten nicht länger als die zulässige Länge der zu übertragenden Daten ist, versehen ist.

## Revendications

1. Réseau local comprenant une pluralité de stations de noeud (STN1 à STNn) connectées à une ligne de transmission commune (BUS), dans laquelle un anneau logique est formé par au moins une partie desdites stations de noeud (STN1 à STNn) afin de passer une trame de jeton (F) d'une station à l'autre dans une boucle sans fin cyclique permettant à chacune desdites stations de noeud qui a reçu ladite trame de jeton (F) de transmettre des données et dans lequel lesdites données transmises comprennent des données asynchrones, caractérisé en ce que
au moins une (STN1) desdites stations de noeud (STN1 à STNn) comprend une unité de transmission de données 24 pour commander la transmission des données, un moyen de mémoire (23) pour mémoriser les données reçues par ladite unité de transmission de données (24), une unité d'application (25) pour traiter les données mémorisées dans ledit moyen de mémoire (23) et un temporisateur pour mesurer l'intervalle de temps qui s'est écoulé depuis que ledit jeton a été reçu par ladite station lors d'un cycle précédent de passage du jeton suivant ledit anneau logique, ladite unité de transmission de données (24) suspendant la transmission des données jusqu'à ce que ledit temporisateur indique une durée établie écoulée.

2. Réseau local selon la revendication 1, dans lequel lesdites données transmises comprennent à la fois des données asynchrones et des données synchrones.

3. Réseau local selon la revendication 1 ou 2, dans lequel ladite trame de jeton (F) comporte une zone (F3) définissant une longueur autorisable de données transmise et chacune desdites stations de noeud (STN1 à STNn) est munie d'un moyen pour transmettre ces données uniquement lorsque ces dites données ne sont pas plus longues que ladite longueur autorisable de données transmises.
